# EUROPÄISCHE PATENTSCHRIFT

(11) **EP 2 812 985 B1**
(45) Veröffentlichungstag und Bekanntmachung des Hinweises auf die Patenterteilung: **29.06.2016**
(21) Anmeldenummer: 13701390.0
(22) Anmeldetag: 11.01.2013
(51) Int. Cl.: H02K 5/10, H02K 7/14, H02K 11/00

(54) **PUMPENAGGREGAT**
PUMP UNIT
GROUPE MOTOPOMPE

(30) Priorität: 08.02.2012 EP 12154461
(43) Veröffentlichungstag der Anmeldung: 17.12.2014
(73) Patentinhaber: Grundfos Holding A/S, 8850 Bjerringbro (DK)
(72) Erfinder: JACOBSEN, John B., DK-8850 Bjerringbro (DK); KROG, Jens, Peter, DK-8860 Ulstrup (DK)
(74) Vertreter: Patentanwälte Vollmann & Hemmer
(86) Internationale Anmeldenummer: PCT/EP2013/050480
(87) Internationale Veröffentlichungsnummer: WO 2013/117380

(56) Entgegenhaltungen:
- GB-A- 2 450 758
- US-A- 5 079 464
- US-A1- 2009 230 697

## Beschreibung

Die Erfindung betrifft ein Pumpenaggregat mit zumindest einem Elektronikaufnahmeraum.

Moderne Pumpenaggregate, welche einen elektrischen Antriebsmotor aufweisen, weisen in der Regel elektronische Bauteile, wie beispielsweise einen Frequenzumrichter zur Ansteuerung des elektrischen Antriebsmotors auf. Diese sind in einem Elektronikaufnahmeraum angeordnet, welcher beispielsweise Teil eines Statorgehäuses sein kann oder auch als separates Elektronikgehäuse bzw. Klemmenkasten ausgebildet sein kann, welches bzw. welcher mit dem Statorgehäuse verbunden ist. Pumpenaggregate werden häufig in feuchter Umgebung eingesetzt, sodass eindringende Feuchtigkeit in dem Elektronikaufnahmeraum häufig ein Problem darstellt.

Im Hinblick auf diese Problematik ist es Aufgabe der Erfindung, ein Pumpenaggregat zu schaffen, bei welchem auf verbesserte Weise ein Eindringen von Feuchtigkeit in den Elektronikaufnahmeraum verhindert werden kann.

Diese Aufgabe wird gelöst durch ein Pumpenaggregat mit den in Anspruch 1 angegebenen Merkmalen. Bevorzugte Ausführungsformen ergeben sich aus den Unteransprüchen, der nachfolgenden Beschreibung sowie den beigefügten Figuren.

Das erfindungsgemäße Pumpenaggregat weist in bekannter Weise einen elektrischen Antriebsmotor sowie bevorzugt zumindest ein Pumpenlaufrad auf. So kann das Pumpenaggregat vorzugsweise als Kreiselpumpenaggregat, beispielsweise als Umwälzpumpenaggregat, ausgebildet sein. Mögliche elektronische Bauelemente, insbesondere zur Steuerung bzw. Regelung des elektrischen Antriebsmotors sind in einem Elektronikaufnahmeraum angeordnet. Dieser kann in einem Motorgehäuse integriert sein oder als separates Elektronikgehäuse bzw. Klemmenkasten ausgebildet sein, welcher mit dem Motor- bzw. Statorgehäuse verbunden ist.

Bei dem erfindungsgemäßen Pumpenaggregat ist der Elektronikaufnahmeraum so ausgebildet, dass eine Luftzufuhr von außen in kontrollierter Weise im Wesentlichen nur über eine Luftführung erfolgt, welche so ausgestaltet ist, dass von außen in den Elektronikaufnahmeraum einströmende Luft in der Luftführung zunächst getrocknet wird, sodass die mit der Luft in den Elektronikaufnahmeraum eindringende Feuchtigkeit reduziert wird. Dazu weist der Elektronikaufnahmeraum erfindungsgemäß zumindest eine definierte Belüftungsöffnung auf. Durch diese definierte Belüftungsöffnung oder ggf. mehrere definierte Belüftungsöffnungen wird sichergestellt, dass zumindest der wesentliche Teil eines Luftaustausches zwischen dem Innenraum des Elektronikaufnameraumes und der Umgebung nur über diese definierte Belüftungsöffnung bzw. die definierten Belüftungsöffnungen erfolgt. Die zumindest eine Belüftungsöffnung mündet an einer Außenseite des Elektronikgehäuses in die Luftführung. Das bedeutet, dass die Öffnung nicht unmittelbar in die Umgebung mündet, sondern in eine Luftführung, welche eine gewisse Strecke definiert, durch welche die Luft geführt strömt.

Diese Luftführung ist an zumindest einer Kondensationsfläche entlanggeführt. Dies bewirkt, dass die Luft, welche in das Innere des Elektronikaufnahmeraumes strömt, durch die Luftführung an der Kondensationsfläche entlanggeleitet wird. An der Kondensationsfläche schlägt sich dann eventuell in der Luft enthaltende Feuchtigkeit nieder, sodass die Luft beim Erreichen der zumindest einen Belüftungsöffnung und vor dem Eintritt in den Elektronikaufnahmeraum zumindest teilweise getrocknet ist, sodass die mit der Luft in den Elektronikaufnahmeraum eintretende Feuchtigkeit reduziert wird. So wird verhindert, dass diese Feuchtigkeit dann in unerwünschter Weise im Inneren des Elektronikaufnameraumes kondensiert und dort zu elektrischen Fehlern oder Beschädigung elektronischer Komponenten führt. Insofern wird durch diese Ausgestaltung ein zuverlässigerer Betrieb des Pumpenaggregates in feuchter Umgebung, insbesondere in einer Umgebung mit hoher Luftfeuchtigkeit verbessert. Dies ist insbesondere bei Verwendung des Pumpenaggregates als Kaltwasserpumpe in einer Klimaanlage von Vorteil, da solche Pumpen häufig in feuchter Umgebung zum Einsatz kommen und darüber hinaus die Problematik besteht, dass im Inneren dieser Pumpen und insbesondere im Inneren eines Elektronikaufnahmeraumes Feuchtigkeit kondensieren kann.

Der Elektronikaufnahmeraum kann im Inneren eines Motor- oder Statorgehäuses ausgebildet sein und dort vorzugsweise von dem eigentlichen Statorraum, in welchem die Statorspulen eines elektrischen Antriebsmotors des Pumpenaggregates angeordnet sind, getrennt sein. Alternativ kann der Elektronikaufnahmeraum auch in einem separaten Elektronikgehäuse bzw. Klemmenkasten ausgebildet sein, welche an einen Motor oder Statorgehäuse angesetzt ist. Dabei kann das Elektronikgehäuse von außen radialseitig oder auch axialseitig an das Statorgehäuse des elektrischen Antriebsmotors angesetzt sein.

Die Luftführung ist vorzugsweise ein Luftkanal, durch welchen die Luft in definierter Weise zu der zumindest einen Belüftungsöffnung strömt. dieser Luftkanal ist an der genannten zumindest einen Kondensationsfläche entlanggeführt, wobei die Kondensationsfläche vorzugsweise einen Teil einer Innenwandung des Kanals bildet.

Besonders bevorzugt kann der Kanal zwischen einer Außenseite einer Außenwandung des Elektronikaufnahmeraumes und einem angrenzenden Bauteil ausgebildet sein. So kann der Luftkanal beispielsweise zwischen der Außenwandung eines Elektronikgehäuses oder Klemmenkastens und einer gegenüberliegenden Wandung eines Motor- oder Statorgehäuse eines Antriebsmotors des Pumpenaggregates ausgebildet sein. Zwischen beiden Bauteilen ist dabei ein Freiraum ausgebildet, welcher den Luftkanal bildet. Dabei muss der Luftkanal nicht zwingend eine ausschließlich längliche Erstreckung haben, sondern lediglich einen Raum definieren, durch welchen Luft definiert zu der zumindest einen Belüftungsöffnung in der Weise strömt, dass sie an der Kondensationsfläche entlanggeführt wird.

Weiter bevorzugt weist die zumindest eine Belüftungsöffnung einen Querschnitt auf, welcher größer ist als der Gesamtquerschnitt der übrigen Undichtigkeiten des Elektronikaufnahmeraumes. Weiter bevorzugt ist die zumindest eine Belüftungsöffnung in ihrem Querschnitt zwischen drei und zehn mal größer als der Gesamtquerschnitt der übrigen Undichtigkeiten des Elektronikaufnahmeraumes. Die übrigen Undichtigkeiten können sich beispielsweise durch verbleibende Restundichtigkeiten an Dichtungen oder auch Öffnungen ergeben, durch welche sich Bedienelemente, wie beispielsweise Achsen von Schaltern, erstrecken. Dadurch, dass die Belüftungsöffnung definiert größer ausgebildet ist als diese übrigen, nicht zu vermeidenden, Undichtigkeiten, wird erreicht, dass ein Luftaustausch mit der Umgebung vorrangig durch diese Belüftungsöffnung erfolgt. Ein solcher Luftaustausch kann beispielsweise durch Druckänderungen, welche sich bei Erwärmung und Abkühlung ergeben, erforderlich sein. Dadurch, dass der Luftaustausch definiert über die Belüftungsöffnung und die sich daran anschließende Luftführung erfolgt, wird sichergestellt, dass die in das Elektronikgehäuse aus der Umgebung eintretende Luft an der Kondensationsfläche zunächst getrocknet wird, sodass die eindringende Feuchtigkeit reduziert werden kann. Wenn die Belüftungsöffnung in ihrem Querschnitt größer als die übrigen Undichtigkeiten ist, wird sichergestellt, dass der Großteil es erfolgenden Luftaustausches mittels getrockneter Luft durch die Belüftungsöffnung erfolgt, sodass die Gesamtmenge der eindringenden Feuchtigkeit reduziert wird, insbesondere wenn die Belüftungsöffnung zwischen drei und zehn mal größer als der Gesamtquerschnitt aller übrigen Undichtigkeiten ist, wird erreicht, dass überwiegend getrocknete Luft durch die Belüftungsöffnung durch das Innere des Elektronikgehäuses eintritt. Wenn die Belüftungsöffnung insgesamt zu groß wird, besteht wiederum die Gefahr, dass direkt durch die Belüftungsöffnung Wasser, beispielsweise Spritzwasser eintreten kann. Dann wären die im Inneren des Elektronikgehäuses angeordneten Bauteile nicht mehr ausreichend gedichtet und die geforderte Schutzklasse könnte möglicherweise nicht eingehalten werden.

Besonders bevorzugt ist der Elektronikaufnahmeraum bis auf die zumindest eine definierte Belüftungsöffnung im Wesentlichen dicht ausgebildet. D. h. es sollen nach Möglichkeit weitere Undichtigkeiten vermieden werden. Dies kann in bekannter Weise durch geeignete Dichtungen geschehen.

Die Kondensationsfläche ist vorzugsweise gekühlt. Auf diese Weise wird sichergestellt, dass die Kondensationsfläche kühler als die vorbeiströmende Luft ist, sodass es zu einer Kondensation der in der Luft befindlichen Feuchtigkeit an der Kondensationsfläche kommt.

Besonders bevorzugt ist die Kondensationsfläche dazu derart angeordnet, dass sie durch ein von dem Pumpenaggregat gefördertes Medium, beispielsweise Wasser, gekühlt werden kann. Dies bietet sich insbesondere dann an, wenn die Pumpe ein kaltes Medium fördert, wie es beispielsweise in Klimaanlagen der Fall ist. Insbesondere kann es sich bei dem Pumpenaggregat um eine Kaltwasserpumpe handeln, welche kaltes Wasser fördert. So kann auf eine spezielle Kühleinrichtung für die Kondensationsfläche verzichtet werden. Diese wird vielmehr direkt durch das ohnehin vorhandene kalte Medium, welches durch die Pumpe gefördert wird, gekühlt. Unter "kalt" ist hierbei ein Medium zu verstehen, welches kälter als die Umgebungsluft ist, welche das Pumpenaggregat umgibt.

Die Kondensationsfläche ist weiter bevorzugt in wärmeleitender Verbindung mit einem Motor- und/oder Pumpengehäuse des Pumpenaggregates oder ist selber Teil eines Motor- und/oder Pumpengehäuse des Pumpenaggregates. Wenn das Pumpenaggregat ein kaltes Medium fördert, wird durch dieses in der Regel auch das Pumpengehäuse und ggf. ein mit dem Pumpengehäuse verbundenes Stator- bzw. Motorgehäuse, sofern diese wärmeleitend ausgebildet sind, gekühlt. Insofern können diese Bauteile als wärmeleitende Bauteile zur Kühlung der Kondensationsfläche dienen. Auch wenn der in dem Motorgehäuse angeordnete Elektromotor eine gewisse Verlustwärme erzeugen kann, so ist es doch insbesondere bei Hocheffizienzmotoren, wie beispielsweise Motoren mit Permanentmagnetrotor, möglich, dass die Temperatur des Motorgehäuses geringer als die Umgebungstemperatur ist, wenn das Motorgehäuse beispielsweise über ein Wärme leitend verbundenes Pumpengehäuse durch ein kühleres gefördertes Medium im Inneren des Pumpengehäuses indirekt gekühlt wird. So kann die Temperatur des Motorgehäuses zwischen der Temperatur des geförderten Fluids und der Umgebungstemperatur liegen. Besonders bevorzugt sind das Motor- und/oder Pumpengehäuse aus Metall ausgebildet, um eine gute Wärmeleitfähigkeit sicherzustellen. Die Kondensationsfläche kann beispielsweise in der Weise selbst Teil des Motor- oder Pumpengehäuses sein, wenn dieses direkt an die Luftführung zu der Belüftungsöffnung angrenzt bzw. einen Luftkanal der Luftführung begrenzt. Alternativ kann eine wärmeleitende Verbindung über einen wärmeleitenden Kontakt zumindest eines zusätzlichen Bauelementes, an welchem die Kondensationsfläche ausgebildet ist, zu dem Motor- und/oder Pumpengehäuse geschaffen sein.

Besonders bevorzugt ist die Kondensationsfläche in wärmeleitender Verbindung mit zumindest einer einen Fluidkanal begrenzender Wandung. Dies kann beispielsweise eine Wandung sein, welche im Inneren eines wärmeleitenden, z. B. metallischen Pumpengehäuses ausgebildet ist. Die Kondensationsfläche kann dann beispielsweise von der Außenseite des Pumpengehäuses gebildet sein, während die genannte Wandung an der Innenseite des Pumpengehäuses ausgebildet ist. Die Kondensationsfläche kann auch an einem weiteren Bauteil angeordnet sein, welches in wärmeleitender Verbindung mit der den Fluidkanal begrenzenden Wandung, beispielsweise einem Pumpengehäuse ist. So kann die Kondensationsfläche beispielsweise an einem Motorgehäuse oder Statorgehäuse ausgebildet sein, welches in wärmeleitender Verbindung mit dem Pumpengehäuse ist. Bevorzugt ist die Wandung, welche den Fluidkanal begrenzt somit Teil des Pumpenaggregates, nämlich beispielsweise eine Innenwandung des Pumpengehäuses. Es ist jedoch zu verstehen, dass der Fluidkanal mit der beschriebenen Wandung auch ein separates mit dem Pumpenaggregates verbundenes Fluid führendes Bauteil, wie beispielsweise einer mit dem Pumpenaggregat verbundene Verrohrung sein kann.

Gemäß einer weiteren bevorzugten Ausführungsform weist das Pumpenaggregat einen elektrischen Antriebsmotor auf, welcher als Spaltrohrmotor ausgebildet ist. Bei einem solchen nasslaufenden Elektromotor befindet sich das zu fördernde Fluid, beispielsweise Wasser, im Inneren des Spaltrohres. Wenn ein kaltes Medium, wie kaltes Wasser, gefördert wird, wird so auch das Spaltrohr gekühlt. So kann die Kondensationsfläche vorzugsweise in wärmeleitender Verbindung mit dem Spaltrohr des elektrischen Antriebsmotors sein oder selber Teil des Spaltrohres sein. Auch auf diese Weise kann die Kühlung der Kondensationsfläche auf einfache Weise durch ein von dem Pumpenaggregat gefördertes kaltes Medium erreicht werden. Erfindungsgemäß ist unter einen Spaltrohr auch ein Spaltrohrtopf zu verstehen, d. h. ein Spaltrohr, welches an einem Axialende verschlossen ist. Darüber hinaus ist erfindungsgemäß als Teil des Spaltrohres auch ein sich an dem Spaltrohr erstreckender Kragen zu verstehen, welcher beispielsweise zur Abdichtung mit dem Statorgehäuse vorgesehen ist. Anstatt mit dem Spaltrohr kann die Kondensationsfläche auch in Wärme leitender Verbindung mit einer beliebigen anderen den Rotorraum begrenzenden Wandung sein oder Teil einer solchen Wandung selber sein. Eine solche Wandung kann neben den Teilen des Spaltrohres auch eine am Axialende des Rotors angeordnete Lagerplatte sein, welche ein Rotorlager trägt und somit auch an den Rotorraum angrenzt und mit dem zu fördernden Fluid in Kontakt ist.

Die Kondensationsfläche ist zweckmäßigerweise an einem metallischen Bauteil ausgebildet, da dies besonders gute wärmeleitende Eigenschaften aufweist.

Gemäß einer weiteren bevorzugten Ausführungsform weist die Luftführung einen die Belüftungsöffnung im Abstand überdeckenden Wandabschnitt auf. D. h. der Wandabschnitt ist in der Ein- und Ausströmrichtung durch die Belüftungsöffnung von dieser beabstandet, d. h. er liegt über der axialen Projektion der Belüftungsöffnung. Durch den Abstand ist jedoch sichergestellt, dass zwischen dem Wandabschnitt und einer die Belüftungsöffnung umgebenden Wandung Luft zu der Belüftungsöffnung strömen kann. Auf diese Weise wird sichergestellt, dass die Belüftung nicht direkt aus der Umgebung erfolgt, sondern die Luft durch die Luftführung zunächst an der Kondensationsfläche entlanggeführt wird. Ferner wird auf diese Weise verhindert, dass Wasser, beispielsweise Spritzwasser, von außen direkt in die Belüftungsöffnung eintreten kann. Es wird so eine Art Labyrinth bzw. Labyrinthdichtung geschaffen, welche einen direkten Eintritt von Luft oder Wasser von außen in das Innere des Elektronikaufnahmeraumes verhindert.

Die Luftführung kann gemäß einer weiteren Ausführungsform der Erfindung in ihrem Verlauf gekrümmt oder gewinkelt sein. Auch so kann eine Labyrinthform geschaffen werden, welche das Eindringen von Wasser in das Innere des Elektronikaufnahmeraumes durch die Belüftungsöffnung verhindert. Darüber hinaus wird so der Weg der Luft, welche durch die Luftführung strömt, verlängert, sodass diese in bessern Kontakt mit der Kondensationsfläche zur Trocknung der Luft gebracht werden kann.

Zweckmäßigerweise ist an der Luftführung oder in der Luftführung ein Kondenswasserablauf ausgebildet. So wird verhindert, dass das Wasser, welches an der Kondensationsfläche kondensiert, in die Belüftungsöffnung eintritt. Das Pumpenaggregat kann dazu bevorzugt eine definierte Einbaulage aufweisen, in welcher sichergestellt ist, dass der Kondenswasserablauf so gelegen ist, dass das Kondenswasser aus der Luftführung von der Belüftungsöffnung weg abgeleitet wird. In der bestimmungsgemäßen Einbaulage liegt der Kondenswasserablauf so bevorzugt tiefer als die Belüftungsöffnung, sodass sichergestellt ist, dass das Wasser bzw. die kondensierte Flüssigkeit durch den Kondenswasserablauf abfließt und nicht in die Belüftungsöffnung eintritt.

Besonders bevorzugt handelt es sich bei dem Pumpenaggregat um ein Umwälzpumpenaggregat, insbesondere ein Umwälzpumpenaggregat für Heizungs- und/oder Klimaanlagen.

Gemäß einer weiteren bevorzugten Ausführungsform weist das Pumpenaggregat einen Elektronikaufnahmeraum in Form eines Elektronikgehäuses oder Klemmenkastens auf und die Belüftungsöffnung ist derartig in einer Wandung angeordnet, dass sie gleichzeitig als Ablauföffnung für Feuchtigkeit aus dem Inneren des Elektronikaufnahmeraumes dienen kann. Die Belüftungsöffnung ist vorzugsweise in einer Außenwandung des Elektronikgehäuses ausgebildet und an der Außenseite der Außenwandung von einer zu der Außenseite der Außenwandung beabstandete Außenwand überdeckt. So wird, wie oben beschrieben, eine Art Labyrinthdichtung geschaffen, welche ein Eindringen von Feuchtigkeit von außen in die Belüftungsöffnung verhindert. Insbesondere schützt die Außenwand die Belüftungsöffnung davor, dass Strahl- oder Spritzwasser in die Belüftungsöffnung von außen eintreten kann.

Vorzugsweise ist die Belüftungsöffnung in einer an ein Statorgehäuse des Pumpenaggregates angrenzenden Wandung des Elektronikgehäuses ausgebildet und die Außenwand ist eine Wand, welche das Statorgehäuse außenseitig, insbesondere umfänglich überlappt bzw. überdeckt. Die Außenwand kann dabei beabstandet zur Außenseite des Statorgehäuses angeordnet sein, sodass ein Freiraum bzw. ein Spalt verbleibt, welcher sich außenseitig an die Belüftungsöffnung anschließt. So kann in dem Fall, dass die Belüftungsöffnung gleichzeitig als Ablauföffnung dient, Kondenswasser durch diese und durch den so geschaffenen Freiraum im Umfangsbereich des Statorgehäuses abfließen.

Der Freiraum bildet ferner eine Luftführung bzw. einen Luftkanal, welcher bewirkt, dass die Luft, welch in die Belüftungsöffnung eintritt, zunächst durch diesen Kanal bzw. diese Luftführung strömen muss. Die Luftführung ist vorzugsweise an einem einem Pumpengehäuse zugewandten Axialende des Statorgehäuses geöffnet. Das Pumpengehäuse ist bevorzugt an der dem Elektronikgehäuse abgewandten Axialende mit dem Statorgehäuse verbunden. Die Luftführung hat somit eine Länge, welche bevorzugt im Wesentlichen der Axiallänge des Statorgehäuses entspricht. Die Luft muss somit einen relativ langen Weg von außen bis zu der Belüftungsöffnung in dem axialseitig an dem Statorgehäuse angeordneten Elektronikgehäuse zurücklegen, sodass sie auf diesem Weg bereits getrocknet werden kann. Dabei dient der Außenumfang des Statorgehäuses als Kondensationsfläche, sodass die Feuchtigkeit in der Luft auf deren Weg bereits am Außenumfang des Statorgehäuses kondensiert. Besonders bevorzugt wird die Luftführung von einer Außenwandung gebildet, welche das Stator- bzw. Motorgehäuse umfänglich umgibt und zum Außenumfang des Statorgehäuses beabstandet ist, sodass der beschriebene Freiraum das Statorgehäuse umfänglich umgibt und als Luftführung fungieren kann. Das Statorgehäuse bildet dabei eine sehr große Kondensationsfläche, an welcher Feuchtigkeit aus der Luft kondensieren kann. Das Statorgehäuse ist vorzugsweise aus Metall ausgebildet und mit dem Pumpengehäuse verbunden, sodass es beim Fördern kalter Medien gekühlt ist.

Nachfolgend wird die Erfindung beispielhaft anhand der beigefügten Figuren beschrieben. In diesen zeigt:
- Fig. 1: eine Schnittansicht eines erfindungsgemäßen Pumpenaggregates,
- Fig. 2: eine Draufsicht auf einen Klemmenkasten eines erfindungsgemäßen Pumpenaggregates,
- Fig. 3: eine Schnittansicht entlang der Linie III-III in Figur 2,
- Fig. 4: eine Seitenansicht des Klemmenkastens gemäß Figuren 2 und 3,
- Fig. 5: eine Schnittansicht entlang der Linie V-V in Figur 4,
- Fig. 6: eine perspektivische Draufsicht auf den Klemmenkasten gemäß Figuren 2 bis 5,
- Fig.7: schematisch die Anordnung möglicher Kondensationsflächen an einem Pumpenaggregat,
- Fig. 8: schematisch die mögliche Anordnung einer Luftführung an dem Pumpenaggregat,
- Fig. 9: schematisch eine weitere Ausführungsform der Erfindung und
- Fig. 10: schematisch eine weitere Ausführungsform der Erfindung.

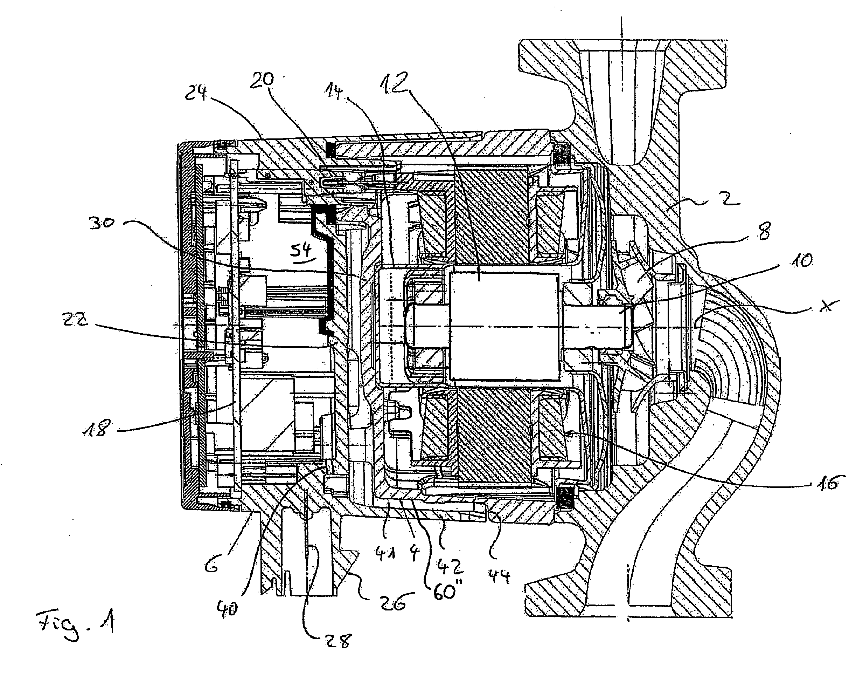

Das in Figur 1 gezeigte Pumpenaggregat bildet eine Baueinheit aus einem Pumpengehäuse 2, einem Motor- bzw. Statorgehäuse 4, welches das Gehäuse eines elektrischen Antriebsmotors bildet und einem Elektronikgehäuse bzw. Klemmenkasten 6. Im Pumpengehäuse 2 ist in bekannter Weise ein Laufrad 8 angeordnet, welches über eine Rotorwelle 10 mit einem Rotor 12 des elektrischen Antriebsmotors verbunden ist. Der Rotor 12 ist in einem durch einen Spaltrohrtopf bzw. ein Spaltrohr 14 begrenzten Rotorraum angeordnet. D. h. es handelt sich um einen nasslaufenden Elektromotor. Umfangsseitig des Spaltrohres 14 ist im Inneren des Statorgehäuses 4 der Stator 16 des elektrischen Antriebsmotors angeordnet.

Der Klemmenkasten 6 bildet einen Elektronikaufnahmeraum und beinhaltet elektronische Bauelemente zur Steuerung bzw. Regelung des elektrischen Antriebsmotors. Dabei kann es sich insbesondere um einen Frequenzumrichter handeln. Die elektronischen Bauelemente sind an einer Leiterplatte 18 im Inneren des Klemmenkastens 6 angeordnet. Zur elektrischen Verbindung mit dem Stator 16 weist der Klemmenkasten 6 eingegossene elektrische Anschlusskontakte 20 auf, welche mit einem korrespondierenden Anschlussstecker an dem Statorgehäuse 4 in Eingriff treten. Durch das Eingießen der Kontakte 20 ist für diese keine Öffnung im Boden 22 des Klemmenkastens 6 erforderlich, so dass dieser im Bereich der Anschlusskontakte 20 geschlossen und dicht ausgebildet sein kann. Der Klemmenkasten 6 weist darüber hinaus an seiner sich quer zum Boden 22 erstreckenden Umfangswandung 24 eine einstückig angeformte Steckkupplung 26 auf, welche ebenfalls eingegossene Anschlusskontakte 28 aufweist, welche sich durch die Umfangswandung 24 in das Innere des Klemmenkastens 6 hinein erstrecken. Die Anschlusskontakte 28 dienen zur Verbindung mit einer Netz-Anschlussleitung. Durch das Eingießen in die Umfangswandung 24 ist der Klemmenkasten 6 auch in diesem Bereich dicht ausgebildet.

Der Klemmenkasten 6 ist wie gezeigt axialseitig in Richtung der Längs- bzw. Drehachse X des Pumpenaggregates an das Statorgehäuse 4 angesetzt, so dass der Boden 22 sich im Wesentlichen parallel zur axialen Stirnseite 30 des Statorgehäuses 4 quer zur Längsachse X erstreckt.

Der Boden 22 weist eine Öffnung 32 auf. Durch die Öffnung 32 erstreckt sich ein Erdungskontakt 34 in das Innere des Klemmenkastens 6 hinein. Der Erdungskontakt 34 ist als metallisches Bauteil ausgebildet, welches elektrisch leitend mit dem ebenfalls aus Metall ausgebildeten Statorgehäuse verbunden ist und sich von dessen axialer Stirnseite 30 parallel zur Längsachse X in den Klemmenkasten 6 hinein erstreckt. In dem Boden 22 des Klemmenkastens 6 ist ein Kontaktelement 36 eingegossen, welches elektrisch leitend mit einem der Anschlusskontakte 28 verbunden ist, welcher als Erd- bzw. Schutzleiter fungiert.

Der Erdungskontakt 34 ist als metallisches Bauteil, welches mit dem metallischen Statorgehäuse 4 verbunden ist, mit dem Statorgehäuse 4 auch wärmeleitend verbunden. Ferner ist zu erkennen, dass das Spaltrohr 14 zumindest axialseitig an der Innenseite des Statorgehäuses 4 anliegt. So wird auch hier eine wärmeleitende Verbindung geschaffen. Wenn die Pumpe ein kaltes Medium, beispielsweise kaltes Wasser fördert, gelangt dieses auch in das Innere des Spaltrohres 14 und es kommt zu einer Abkühlung des Spaltrohres 14 und auch des Statorgehäuses 4. So kühlt sich auch der Erdungskontakt 34 ab und bildet somit im Inneren des Klemmenkastens 6 einen kalten, vorzugsweise den kältesten Punkt, an welchem sich somit Kondenswasser im Inneren des Klemmenkastens 6 ansammeln kann. So kann die Feuchtigkeit im Inneren des Klemmenkastens 6 gezielt an dem Erdungskontakt 34 gesammelt werden, so dass die Feuchtigkeit die Funktion der elektrischen Bauteile auf der Leiterplatte 18 nicht beeinträchtigt.

Um von dem Erdungskontakt 34 abtropfendes Kondenswasser aufzufangen, ist im Inneren des Klemmenkastens 6 eine Auffangeinrichtung ausgebildet. Diese wird von zwei sich V-förmig zueinander erstreckenden Wandelementen 38 gebildet. Die Seitenflächen dieser Wandelemente 38, welche einander zugewandt sind, definieren so eine Auffangrinne. In dem Bereich, an dem die Wandelemente 38 aneinander angrenzen, ist eine Ablauföffnung 40 am Boden der so gebildeten Rinne angeordnet. Die Ablauföffnung 40 ist im Umfangsbereich, d. h. in der Umfangswandung 24 des Klemmenkastens 6 angeordnet. Das hier gezeigte Pumpenaggregat ist zumindest dann, wenn die beschriebene Auffangeinrichtung unterhalb des Erdungskontaktes 34 ihren Zweck erfüllen soll, in einer definierten Einbaulage zu verwenden, in welcher in diesem Ausführungsbeispiel die Steckkupplung 26 vertikal nach unten gerichtet ist. In dieser vorgegebenen Einbaulage ist auch die Ablauföffnung 40 nach unten gerichtet. In der Umfangswandung 24 ist die Ablauföffnung 40 an der tiefsten Stelle der von den Wandelementen 28 gebildeten Auffangrinne gelegen. Die Wandelemente 38 erstrecken sich so weit, dass sie nicht nur vertikal unterhalb des gesamten Erdungskontaktes 34 sondern auch des metallischen Kontaktelementes 36 im Boden 22 des Klemmenkastens 6 gelegen sind. So fängt die Auffangrinne, welche von den Wandelementen 38 aufgespannt wird, auch Kondenswasser auf, welches von dem Kontaktelement 36 abtropft. Das Kondenswasser wird von den Wandelementen 38 der Ablauföffnung 40 zugeführt und kann durch diese aus dem Klemmenkasten 6 nach außen austreten.

Die Ablauföffnung 40 ist jedoch nicht direkt nach außen geöffnet, sondern öffnet sich in einen Freiraum bzw. Ringspalt 41, welcher zwischen dem Außenumfang des Statorgehäuses 4 und einer Außenwand 42 gebildet ist, welche sich als axiale Verlängerung der Umfangswandung 24 über den Außenumfang des Statorgehäuses 4 erstreckt. D. h. der Klemmenkasten 6 überlappt mit seiner Außenwandung 42 den Außenumfang des Statorgehäuses 4. Wie in Figur 1 zu sehen ist, muss der Ringspalt 41 nicht konzentrisch zur Längsachse X ausgebildet sein. Vielmehr weist er in dieser Ausführungsform an der unteren Seite (in der definierten Einbaulage des Pumpenaggregates) eine größere Höhe bzw. radiale Breite auf als an der Oberseite. Aus der Ablauföffnung 40 fließt das Kondenswasser in diesen Ringspalt 41 und kann aus diesem am axialen Ende der Außenwand 42, welche eine im Wesentlichen zylindrische, d. h. hier leicht konische Form aufweist, austreten. D. h. das Kondenswasser tritt dann an dem Ringspalt zwischen dem Axialende der Außenwand 42 und der gegenüberliegenden Stufe 44 am Außenumfang des Statorgehäuses 4 aus.

Dadurch, dass sich der von dem Ringspalt 41 gebildete Kanal, durch welchen das Kondenswasser abfließen muss, über eine große axiale Länge in Richtung der Längsachse X erstreckt, wird erreicht, dass Wasser bzw. Feuchtigkeit nicht ohne weiteres von außen in die Ablauföffnung 40 eintreten kann, so dass durch die Ablauföffnung 40 keine zusätzliche Gefahr geschaffen wird, das Feuchtigkeit in das Innere des Klemmenkastens 6 eindringt.

Darüber hinaus wirkt der Ringspalt 41 als Luftführung oder Luftkanal und hat den Effekt, dass Luft, bevor sie in die Ablauföffnung 40 eintritt, zunächst getrocknet wird, da diese Luft in dem Ringspalt 41 am Außenumfang des Statorgehäuses 4 in axialer Richtung entlang strömen muss. Da das Statorgehäuse 4 aus Metall ist und wärmeleitend mit dem Pumpengehäuse und dem Spaltrohr 14 verbunden ist, kühlt sich das Statorgehäuse 4 bei Förderung kalter Medien, insbesondere Kaltwasser ab, so dass sich Feuchtigkeit in der in den Ringspalt 41 einströmender Luft am Außenumfang des Statorgehäuses 4 niederschlagen wird und die Luft, wenn sie die Ablauföffnung 40 erreicht, somit im Wesentlichen getrocknet ist. Vom Statorgehäuse 4 kann das Kondenswasser abtropfen und durch den Ringspalt 41 zu dem Spalt an der Stufe 44 des Statorgehäuses 4 abfließen und dort nach außen austreten. Dies wird dadurch begünstigt, dass die Außenwand 42 nicht exakt zylindrisch ist, sondern vielmehr an ihrem Innenumfang konisch ausgebildet ist, wobei sie sich zum eigentlichen Klemmenkasten 6 hin verjüngt. Auf diese Weise wird bei der vorgegebenen, in Figur 1 gezeigten Einbaulage ein Gefälle zu der Stufe 44 hin erreicht, welche das Abfließen des Wassers begünstigt.

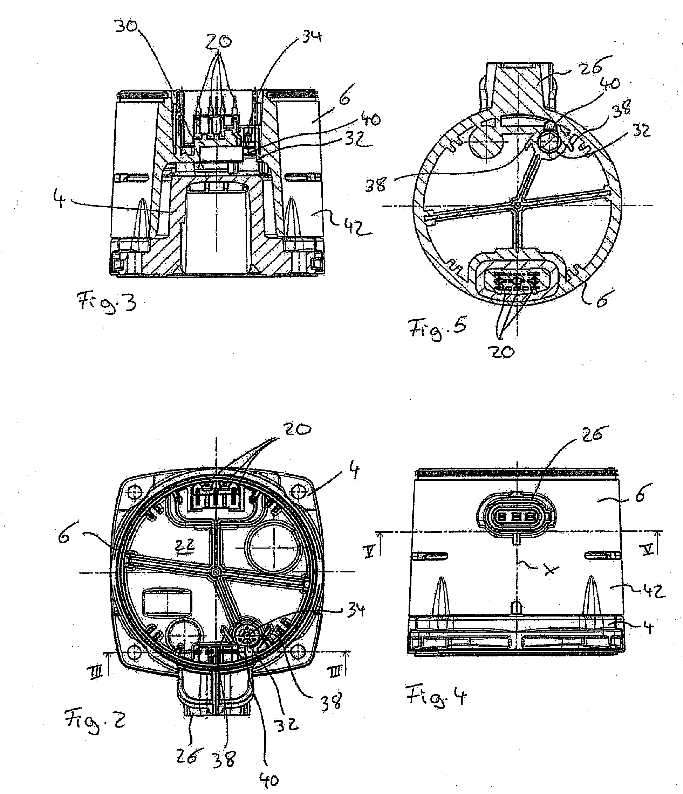

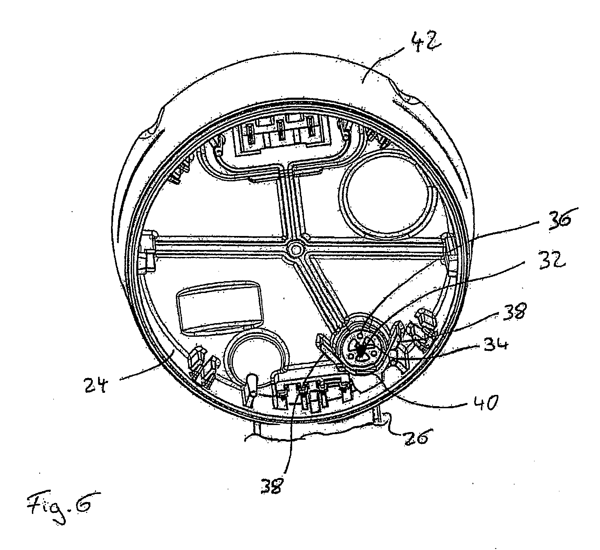

In dem vorangehend anhand von Figur 1 - 6 beschriebenen Ausführungsbeispiel hat die Ablauföffnung 40 somit eine Doppelfunktion, sie dient neben dem Kondenswasserablauf auch als Belüftungsöffnung. Mit Ausnahme dieser Ablauföffnung 40 ist der Klemmenkasten 6, welcher einen Elektronikaufnahmeraum bildet, im Wesentlichen dicht ausgebildet, sodass die Ablauföffnung auf jeden Fall einen größeren Querschnitt aufweist als die übrigen noch verbleibenden Undichtigkeiten des Klemmenkastens. So erfolgt der Luftaustausch zwischen dem Inneren des Klemmenkastens 6 und der Umgebung im Wesentlichen allein durch die als Belüftungsöffnung dienende Ablauföffnung 40 mit dem Vorteil, dass die einströmende Luft vorher getrocknet wird, da sie an der als Kondensationsfläche dienenden Außenumfangsfläche des Statorgehäuses 4 vorbeigeführt wird.

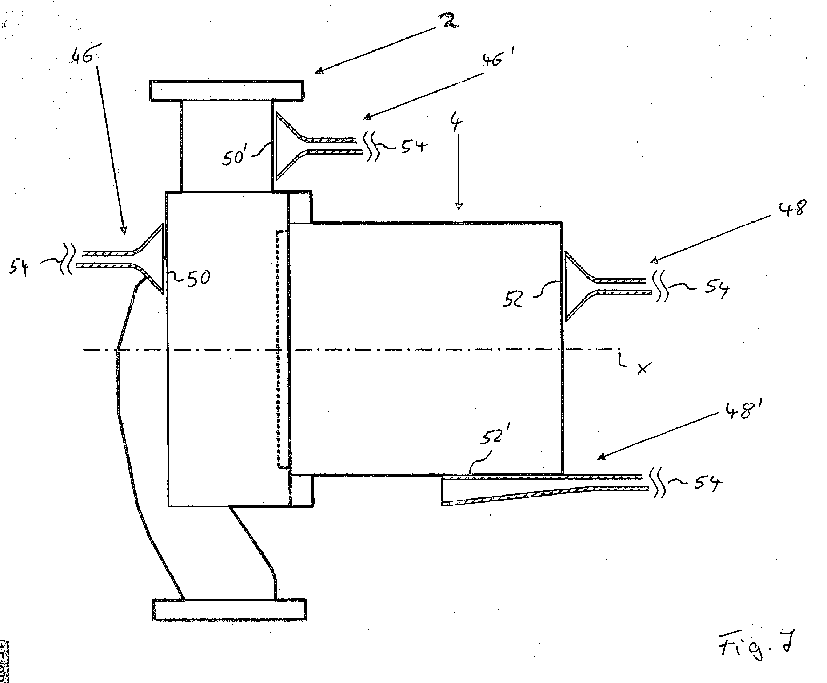

Dieser vorangehend beschriebene Trocknungseffekt der Luft kann auch unabhängig von dem anhand von Figur 1 - 6 beschriebenen Kondenswasserablauf realisiert werden. Im Idealfall wird im Klemmenkasten 6 so wenig Kondenswasser anfallen, dass auf einen solche Kondenswasserablauf verzichtet werden kann. Anhand der Figuren 7 - 10 werden nun prinzipiell weitere mögliche Anordnungen einer Luftführung beschrieben. Im vorangehenden Ausführungsbeispiel dient der Ringspalt 41 als Luftführung. In Figur 7 ist der Elektronikaufnahmeraum nicht näher gezeigt. Es sind vielmehr vier verschiedene Luftführungen 46, 46' sowie 48 und 48' gezeigt. Diese sind in diesem Fall trichterförmig erweitert und die Luftführungen 46 und 46' sind Außenwandungen des Pumpengehäuses 2 zugewandt, sodass die Wandungen 50 und 50' als Kondensationsflächen dienen, wie in der ersten Ausführungsform die Außenumfangsfläche des Motor- bzw. Statorgehäuses 4. Wenn das Pumpengehäuse 2 und das Statorgehäuse 4 aus Metall ausgebildet sind und die Pumpe ein kühleres Medium als die Umgebungstemperatur führt, werden die Wandungen 50, 50' und 52 und 52' durch das im Pumpengehäuse 2 fließende Medium gekühlt, sodass diese Flächen, welche an die Luftführung 46, 46' sowie 48 und 48' angrenzen, gekühlte Kondensationsflächen bilden, an welchen sich Feuchtigkeit niederschlägt, bevor sie in die Luftführungen eintritt bzw. zu dem Elektronikaufnahmeraum 54, welcher hier nur schematisch gezeigt ist, hinströmt. Ein solcher Elektronikaufnahmeraum 54 kann durch einen Klemmenkasten oder Elektronikgehäuse gebildet sein, welches an beliebiger Stelle des Pumpenaggregates angeordnet sein kann. Dieses ist dann bevorzugt im Wesentlichen dicht ausgebildet. Es ist zu verstehen, dass die vier schematischen Anordnungen von Luftführungen 46, 46', 48 und 48' in Figur 7 als alternative Anordnungen gedacht sind, welche jedoch ggf. auch in Kombination realisiert werden können.

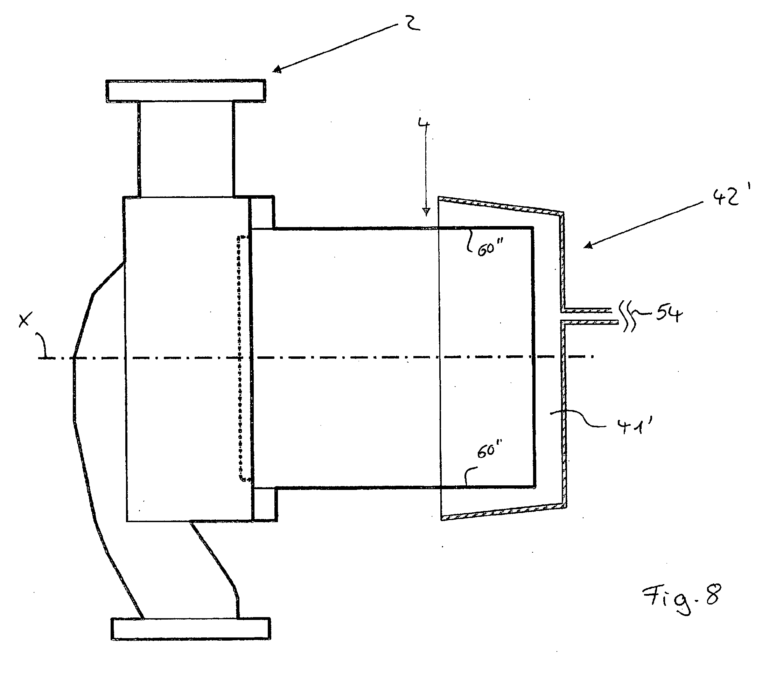

Figur 8 zeigt noch einmal eine Ausführungsform, welche im Wesentlichen der Ausführungsform gemäß Figuren 1 - 6 entspricht. Auch hier ist das Elektronikgehäuse bzw. der Elektronikaufnahmeraum 54 nur schematisch gezeigt. Auch hier wird eine Luftführung durch einen Ringspalt 41' realisiert, welcher zwischen der Außenfläche des Statorgehäuses 4 und einer glockenförmigen Außenwandung 42', welche über das Axialende des Statorgehäuses 4 gestülpt ist, gebildet wird. Der Ringspalt 41' dient als Luftkanal bzw. Luftführung, sodass Luft von dem den Pumpengehäuse 2 zugewandten Axialende in den Ringspalt 41' einströmt und dabei über die Außenwand des Statorgehäuses 4 geführt wird, welche dabei als Kondensationsfläche dient, sodass Feuchtigkeit dort kondensiert, bevor die Luft in den Elektronikaufnahmeraum 54 weiter strömt.

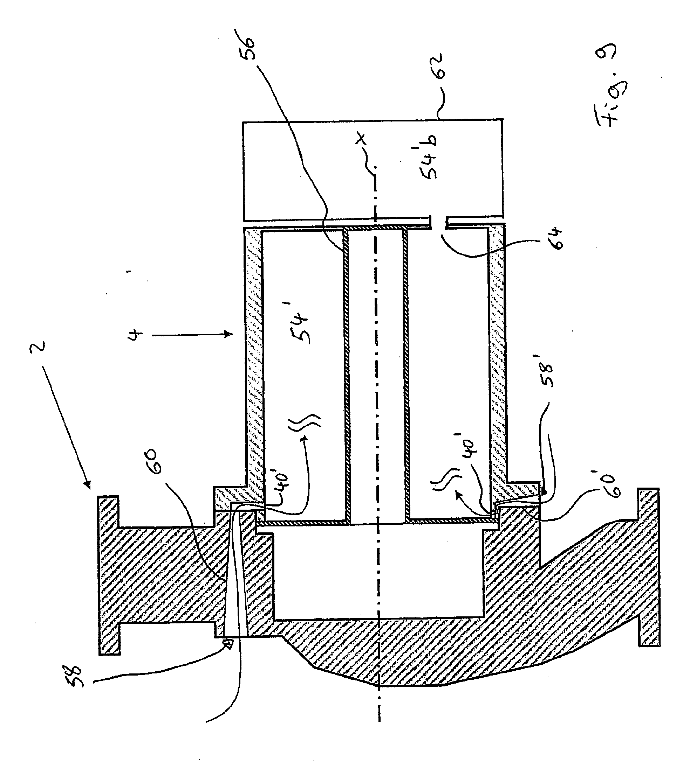

Bei dem Ausführungsbeispiel gemäß Figur 9 wird der Elektronikaufnahmeraum 54' von einem Statorraum im Inneren des Statorgehäuses 4 gebildet, welcher ein Spaltrohr 56 ringförmig umgibt.

Hier können somit elektronische Bauteile gemeinsam mit den Statorspulen in dem Ringraum, welcher das Spaltrohr 56 umgibt, angeordnet sein.

In Figur 9 sind zwei mögliche Beispiele von Luftführungen 58 und 58' gezeigt, wobei die Luftführung 58 als Kanal oder Bohrung durch das Pumpengehäuse 2 hindurchführt und dann in das Innere des Statorgehäuses 4, d. h. in den Ringraum zwischen Spaltrohr bzw. Spaltrohrtopf 56 und Statorgehäuse 4 mündet. Bei dieser Luftführung 58 dient die Innenwandung des Kanals durch das Pumpengehäuse 2 als Kondensationsfläche 60. Der Kanal, welcher die Luftführung 58 bildet, ist zu seiner Eintrittsöffnung hin konisch aufgeweitet, sodass die untere Innenfläche bei horizontaler Einbaulage des Pumpenaggregates, wie sie in Figur 9 gezeigt ist, zur Eintrittsöffnung nach unten abfällt, sodass Wasser, welches an der Kondensationsfläche 60 kondensiert, nach außen abließen kann und nicht in den Elektronikaufnahmeraum 54' fließt. Die zweite alternative Anordnung einer definierten Belüftungsöffnung 40' ist in Figur 9 an de Unterseite gezeigt. Dort ist ein Luftkanal bzw. eine Luftführung 58' von der Unterseite durch den Spalt zwischen dem Axialende des Statorgehäuses 4 und dem Pumpengehäuse 2 hindurch in den das Spaltrohr 56 umgebenden Innenraum des Statorgehäuses 4 hinein gezeigt. Bei der hier gezeigten bevorzugten Einbaulage mit horizontaler Drehachse X ist die Luftführung 58' nach unten hin geöffnet, sodass Wasser, welches an der axialen Stirnseite 60' des Pumpengehäuses 2, welche hier als Kondensationsfläche dient, kondensiert, nach unten und außen ablaufen kann.

Darüber hinaus zeigt Figur 9 noch eine weitere mögliche Variante der Erfindung. So ist bei dem in Fig. 9 gezeigten Pumpenaggregat axialseitig in Richtung der Längsachse X an das Motor- bzw. Statorgehäuse 4 ein Elektronikgehäuse 62 angesetzt, welches mit dem Innenraum bzw.

Elektronikaufnahmeraum 54' im Inneren des Statorgehäuses 4 über eine Verbindungsöffnung 64 verbunden ist. Die Verbindungsöffnung 64 stellt eine einen Luftaustausch ermöglichende Verbindung zwischen dem Elektronikaufnahmeraum 54' sowie dem Elektronikaufnahmeraum 64'b im Inneren des Elektronikgehäuses 62 her. Zusätzlich können durch die Öffnung 64 beispielsweise auch elektrische Kabel zur elektrischen Verbindung von elektrischen und elektronischen Bauteilen im Inneren des Elektronikaufnahmeraumes 54'b mit elektrischen Bauteilen bzw. elektronischen Bauteilen in dem Elektronikaufnahmeraum 54' angeordnet sein. Es ist zu verstehen, dass das Ausführungsbeispiel gemäß Figur 9 auch ohne das zusätzliche Elektronikgehäuse 62 realisiert werden kann. Wenn das Elektronikgehäuse 62 vorgesehen ist, wird dessen Innenraum bzw. Elektronikaufnahmeraum 54'b somit indirekt über die Öffnung 64 und eine der Luftführungen 58 und/oder 58' über den Elektronikaufnahmeraum 54' im Inneren des Statorgehäuses bellüftet. So wird auch der Elektronikaufnahmeraum 54'b mit getrockneter Luft belüftet, wobei gegebenenfalls eine zusätzliche Lufttrocknung im Inneren des Elektronikaufnahmeraums 54', beispielsweise an dem Spaltrohr 56 durch Kondensation von Feuchtigkeit erfolgen kann. So ist es möglich, dass in dem Elektronikaufnahmeraum 54' elektrische und/elektronische Komponenten, welche weniger feuchtigkeitsempfindlich sind, angeordnet werden, als in dem Elektronikaufnahmeraum 54'b. So können in dem Elektronikaufnahmeraum 54'b insbesondere Bauteile zur Steuerung und/oder Regelung des Antriebsmotors untergebracht werden, während in dem Elektronikaufnahmeraum 54' dann möglicherweise nur die Statorspulen des elektrischen Antriebsmotors angeordnet sind, welche gegenüber Feuchtigkeit weniger empfindlich sind, da die Wicklungsdrähte der Statorspulen ebenfalls noch einmal isoliert sind.

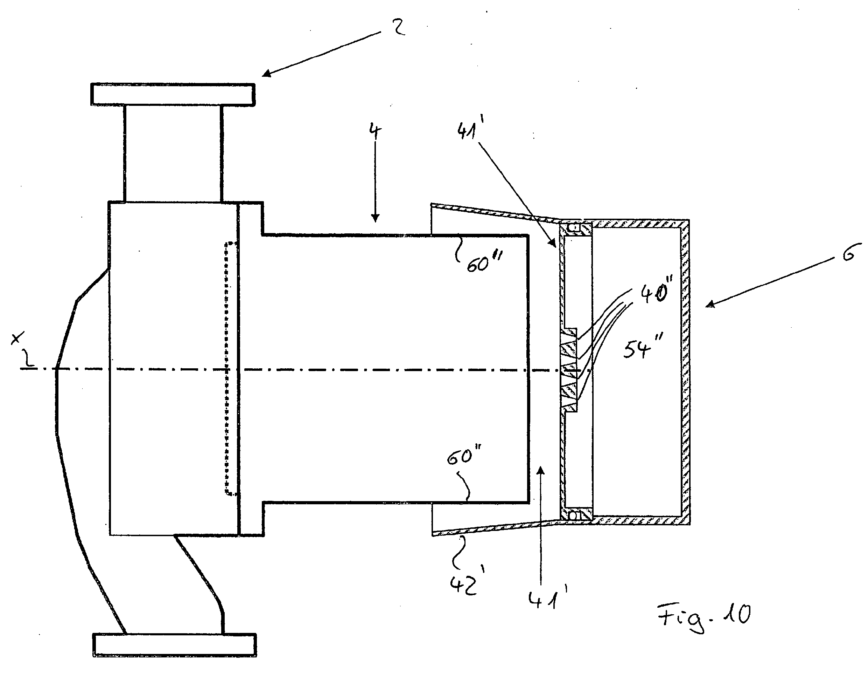

Figur 10 zeigt ein Ausführungsbeispiel ähnlich dem in den Figuren 1 - 6 und Figur 8 gezeigten Ausführungsbeispiel. Hier ist ein Klemmenkasten 6 axialseitig an das Statorgehäuse 4 angesetzt, wie in Figuren 1 - 6 gezeigt. Auch hier umgreift der Klemmenkasten 6 mit einer axial verlängerten Außenwand 42 topf- bzw. glockenförmig das Axialende des Statorgehäuses 4, so dass ein Ringspalt 41 gebildet wird, welcher zu dem, dem Pumpengehäuse 2 zugewandten Axialende hin geöffnet ist. Im Boden des Klemmenkastens 6, welcher einen Elektronikaufnahmeraum 54" definiert, sind in diesem Fall mehrere definierte Belüftungsöffnungen 40" angeordnet. Im Übrigen ist der Elektronikaufnahmeraum 54", d. h. der Klemmenkasten 6, nach außen abgedichtet, sodass ein Luftaustausch nach außen im Wesentlichen nur durch die Belüftungsöffnungen 40" erfolgen kann. Die Luft, welche durch die Belüftungsöffnungen 40" in den Elektronikaufnahmeraum 54" eintritt, muss jedoch vorher durch den Ringspalt 41 über die Außenumfangsfläche des Statorgehäuses 4 strömen, wobei die Außenumfangsfläche des Statorgehäuses 4 hier dann als Kondensationsfläche dient, wie auch bei dem Ausführungsbeispiel gemäß Figur 8. Die Außenwand 42' ist hier, wie bei der Ausführungsform gemäß Figur 8, so ausgebildet, dass sie zum Eintrittsende hin, d. h. dem Pumpengehäuse 2 hingewandten Ende, erweitert ist, sodass bei der vorgesehenen Einbaulage, welche in Figur 10 gezeigt ist, bei welcher sich die Drehachse X horizontal erstreckt, die untere Innenfläche der Außenwandung 42' zur Öffnungsseite hin nach unten geneigt ist, so dass Kondenswasser nach außen abfließen kann.

### Bezugszeichenliste

- 2: Pumpengehäuse
- 4: Statorgehäuse
- 6: Klemmenkasten
- 8: Laufrad
- 10: Rotorwelle
- 12: Rotor
- 14: Spaltrohr
- 16: Stator
- 18: Leiterplatte
- 20: Anschlusskontakte
- 22: Boden
- 24: Umfangswandung
- 26: Steckkupplung
- 28: Anschlusskontakte
- 30: Axiale Stirnseite
- 32: Öffnung
- 34: Erdungskontakt
- 36: Kontaktelement
- 38: Wandelemente
- 40, 40', 40": Ablauföffnung bzw. Belüftungsöffnung
- 41, 41': Ringspalt, welcher als Luftführung dient
- 42, 42': Außenwand
- 44: Stufe
- 46, 46': Luftführungen
- 48, 48': Luftführungen
- 50, 50': Wandungen
- 52, 52': Wandungen
- 54, 54', 54'b, 54": Elektronikaufnahmeraum
- 56: Spaltrohr
- 58, 58': Luftführungen
- 60, 60', 60": Kondensationsflächen
- 62: Elektronikgehäuse
- 64: Öffnung

- X: Längsache bzw. Drehachse

## Patentansprüche

1. Pumpenaggregat mit zumindest einem Elektronikaufnahmeraum (54; 54'; 54") **dadurch gekennzeichnet, dass** der Elektronikaufnahmeraum (54; 54'; 54") zumindest eine definierte Belüftungsöffnung (40; 40'; 40") aufweist und die Belüftungsöffnung (40; 40'; 40") an einer Außenseite des Elektronikaufnahmeraumes (54; 54'; 54") in eine Luftführung (41; 41'; 46; 46'; 48; 48') mündet, welche an zumindest einer Kondensationsfläche(50; 50'; 52; 52'; 60; 60'; 60") entlang geführt ist.

2. Pumpenaggregat nach Anspruch 1, **dadurch gekennzeichnet, dass** die Luftführung (41; 41'; 46; 46'; 48; 48') als ein Luftkanal, insbesondere zwischen einer Außenseite einer Außenwandung (42; 42') des Elektronikaufnahmeraumes (54) und einem angrenzenden Bauteil (4) ausgebildet ist.

3. Pumpenaggregat nach Anspruch 1 oder 2, **dadurch gekennzeichnet, dass** die zumindest eine Belüftungsöffnung (40; 40'; 40") einen Querschnitt aufweist, welcher größer, bevorzugt zwischen drei und zehn mal größer ist als der Gesamtquerschnitt der übrigen Undichtigkeiten des Elektronikaufnahmeraumes (54; 54'; 54").

4. Pumpenaggregat nach einem der vorangehenden Ansprüche, **dadurch gekennzeichnet, dass** der Elektronikaufnahmeraum (54; 54'; 54") bis auf die zumindest eine Belüftungsöffnung (40; 40'; 40") im Wesentlichen dicht ausgebildet ist.

5. Pumpenaggregat nach einem der vorangehenden Ansprüche, **dadurch gekennzeichnet, dass** die Kondensationsfläche (50; 50'; 52; 52'; 60; 60'; 60") gekühlt ist.

6. Pumpenaggregat nach Anspruch 5, **dadurch gekennzeichnet, dass** die Kondensationsfläche (50; 50'; 52; 52'; 60; 60'; 60") derart angeordnet ist, dass sie durch ein von dem Pumpenaggregat gefördertes Medium gekühlt werden kann.

7. Pumpenaggregat nach einem der vorangehenden Ansprüche, **dadurch gekennzeichnet, dass** die Kondensationsfläche (50; 50'; 52; 52'; 60; 60'; 60") in wärmeleitender Verbindung mit einem Motor-(4) und/oder Pumpengehäuse (2) des Pumpenaggregates oder Teil eines Motor-(4) und/oder Pumpengehäuses (2) des Pumpenaggregates ist.

8. Pumpenaggregat nach einem der vorangehenden Ansprüche, **dadurch gekennzeichnet, dass** die Kondensationsfläche (50; 50'; 52; 52'; 60; 60'; 60") in wärmeleitender Verbindung mit zumindest einer einen Fluidkanal begrenzenden Wandung ist, wobei die Wandung vorzugsweise Teil des Pumpenaggregates ist.

9. Pumpenaggregat nach einem der vorangehenden Ansprüche, **dadurch gekennzeichnet, dass** das Pumpenaggregat einen als Spaltrohrmotor ausgebildeten elektrischen Antriebsmotor aufweist,

10. Pumpenaggregat nach einem der vorangehenden Ansprüche, **dadurch gekennzeichnet, dass** die Kondensationsfläche in wärmeleitender Verbindung mit zumindest einer den Rotorraum des elektrischen Antriebsmotors begrenzenden Wandung (14; 56) oder Teil einer solchen Wandung ist.

11. Pumpenaggregat nach einem der vorangehenden Ansprüche, **dadurch gekennzeichnet, dass** die Kondensationsfläche (50; 50'; 52; 52'; 60; 60'; 60") an einem metallischen Bauteil ausgebildet ist.

12. Pumpenaggregat nach einem der vorangehenden Ansprüche, **dadurch gekennzeichnet, dass** die Luftführung (41; 41') einen die Belüftungsöffnung (40; 40'; 40") im Abstand überdeckenden Wandabschnitt (42; 42') aufweist.

13. Pumpenaggregat nach einem der vorangehenden Ansprüche, **dadurch gekennzeichnet, dass** die Luftführung in ihrem Verlauf gekrümmt oder gewinkelt ist.

14. Pumpenaggregat nach einem der vorangehenden Ansprüche, **dadurch gekennzeichnet, dass** an der Luftführung ein Kondenswasserablauf ausgebildet ist.

15. Pumpenaggregat nach Anspruch 14, **dadurch gekennzeichnet, dass** der Kondenswasserablauf bei bestimmungsgemäßer Einbaulage des Pumpenaggregates tiefer als die Belüftungsöffnung (40; 40'; 40")gelegen ist.

## Claims

1. A pump assembly with at least one electronics receiving space (54; 54'; 54"), **characterised in that** the electronics receiving space (54; 54'; 54") comprises at least one defined ventilation opening (40; 40'; 40"), and the ventilation opening (40; 40'; 40") at an outer side of the electronics receiving space (54; 54'; 54") runs out into air duct (41; 41'; 46; 46'; 48, 48') which is led along at least one condensation surface (50; 50'; 52; 52'; 60; 60'; 60").

2. A pump assembly according to claim 1, **characterised in that** the air duct (41; 41'; 46; 46'; 48, 48') is designed as an air channel, in particular between an outer side of an outer wall (42; 42') of the electronics receiving space (54) and an adjacent component (4).

3. A pump assembly according to claim 1 or 2, **characterised in that** the at least one ventilation opening (40; 40'; 40") has a cross section which is larger, preferably between three and ten times larger than the total cross section of the remaining leakages of the electronics receiving space (54; 54'; 54").

4. A pump assembly according to one of the preceding claims, **characterised in that** the electronics receiving space (54; 54'; 54") is designed in an essentially sealed manner with the exception of the at least one ventilation opening (40; 40'; 40").

5. A pump assembly according to one of the preceding claims, **characterised in that** the condensation surface (50; 50'; 52; 52'; 60; 60'; 60") is cooled.

6. A pump assembly according to claim 5, **characterised in that** the condensation surface (50; 50'; 52; 52'; 60; 60'; 60") is arranged in a manner such that it can be cooled by a medium delivered by the pump assembly.

7. A pump assembly according to one of the preceding claims **characterised in that** the condensation surface (50; 50'; 52; 52'; 60; 60'; 60") is in thermally conductive connection with a motor housing (4) and/or pump housing (2) of the pump assembly, or part of a motor housing (4) and/or pump housing (2) of the pump assembly.

8. A pump assembly according to one of the preceding claims, **characterised in that** the condensation surface (50; 50'; 52; 52'; 60; 60'; 60") is in thermally conductive connection with at least one wall delimiting a fluid channel, wherein the wall is preferably part of the pump assembly.

9. A pump assembly according to one of the preceding claims, **characterised in that** the pump assembly comprises an electric drive motor designed as a canned motor.

10. A pump assembly according to one of the preceding claims, **characterised in that** the condensation surface is in thermally conductive connection with at least one wall (14; 56) which delimits the rotor space of the electrical drive motor or is part of such a wall.

11. A pump assembly according to one of the preceding claims, **characterised in that** the condensation surface (50; 50'; 52; 52'; 60; 60'; 60") is formed on a metallic component.

12. A pump assembly according to one of the preceding claims, **characterised in that** the air duct (41; 41') comprises a wall section (42; 42') which covers the ventilation opening (40; 40'; 40") at a distance.

13. A pump assembly according to one of the preceding claims, **characterised in that** the air duct is arcuate or angled in its course.

14. A pump assembly according to one of the preceding claims, **characterised in that** a condensation water run-off is formed on the air duct.

15. A pump assembly according to claim 14, **characterised in that** the condensation water run-off is situated more deeply than the ventilation opening (40; 40'; 40"), given a correct installation position of the pump assembly.

## Revendications

1. Groupe motopompe avec au moins un espace de logement d'électronique (54 ; 54' ; 54"), **caractérisé en ce que** l'espace de logement d'électronique (54 ; 54' ; 54") comprend au moins une ouverture définie de ventilation (40 ; 40' ; 40") et que l'ouverture de ventilation (40 ; 40' ; 40") débouche sur une face extérieure de l'espace de logement d'électronique (54 ; 54' ; 54") dans une conduite d'air (41 ; 41' ; 46 ; 46' ; 48 ; 48') qui passe le long d'au moins une surface de condensation (50 ; 50' ; 52 ; 52' ; 60 ; 60' ; 60").

2. Groupe motopompe selon la revendication 1, **caractérisé en ce que** la conduite d'air (41 ; 41' ; 46 ; 46' ; 48 ; 48') est conformée comme un canal d'air, notamment entre une face extérieure d'une paroi extérieure (42 ; 42') de l'espace de logement d'électronique (54) et un composant adjacent (4).

3. Groupe motopompe selon la revendication 1 ou 2, **caractérisé en ce que** ladite au moins une ouverture de ventilation (40 ; 40' ; 40") présente une section transversale qui est plus grande, de préférence entre trois et dix fois plus grande que la section transversale totale des autres inétanchéités de l'espace de logement d'électronique (54 ; 54' ; 54").

4. Groupe motopompe selon l'une des revendications précédentes, **caractérisé en ce que** l'espace de logement d'électronique (54 ; 54' ; 54") est formé essentiellement étanche, à l'exception de ladite au moins une ouverture de ventilation (40 ; 40' ; 40").

5. Groupe motopompe selon l'une des revendications précédentes, **caractérisé en ce que** la surface de condensation (50 ; 50' ; 52 ; 52' ; 60; 60' ; 60") est refroidie.

6. Groupe motopompe selon la revendication 5, **caractérisé en ce que** la surface de condensation (50 ; 50' ; 52 ; 52' ; 60 ; 60' ; 60") est disposée de façon qu'elle puisse être refroidie par le fluide pompé par le groupe motopompe.

7. Groupe motopompe selon l'une des revendications précédentes, **caractérisé en ce que** la surface de condensation (50 ; 50' ; 52 ; 52' ; 60; 60' ; 60") est en liaison thermo-conductrice avec un carter de moteur (4) et/ou un carter de pompe (2) du groupe motopompe ou fait partie d'un carter de moteur (4) et/ou d'un carter de pompe (2) du groupe motopompe.

8. Groupe motopompe selon l'une des revendications précédentes, **caractérisé en ce que** la surface de condensation (50 ; 50' ; 52 ; 52' ; 60; 60' ; 60") est en liaison thermo-conductrice avec au moins une paroi délimitant un canal de fluide, la paroi faisant de préférence partie du groupe motopompe.

9. Groupe motopompe selon l'une des revendications précédentes, **caractérisé en ce que** le groupe motopompe comprend un moteur d'entraînement électrique formé comme moteur à gaine.

10. Groupe motopompe selon l'une des revendications précédentes, **caractérisé en ce que** la surface de condensation est en liaison thermo-conductrice avec au moins une paroi (14 ; 56) délimitant l'espace du rotor du moteur d'entraînement électrique ou fait partie d'une telle paroi.

11. Groupe motopompe selon l'une des revendications précédentes, **caractérisé en ce que** la surface de condensation (50 ; 50' ; 52 ; 52' ; 60 ; 60' ; 60") est formée sur un composant métallique.

12. Groupe motopompe selon l'une des revendications précédentes, **caractérisé en ce que** la conduite d'air (41 ; 41') comprend une partie de paroi (42 ; 42') recouvrant, avec une distance, l'ouverture de ventilation (40 ; 40' ; 40").

13. Groupe motopompe selon l'une des revendications précédentes, **caractérisé en ce que**, sur son parcours, la conduite d'air est courbée ou coudée.

14. Groupe motopompe selon l'une des revendications précédentes, **caractérisé en ce que** sur la conduite d'air est formée une évacuation d'eau de condensation.

15. Groupe motopompe selon la revendication 14, **caractérisé en ce que** l'évacuation d'eau de condensation est, en position d'installation du groupe motopompe conforme à sa destination, plus basse que l'ouverture de ventilation (40 ; 40' ; 40").
